# EUROPEAN PATENT APPLICATION

(11) **EP 4 745 931 A1**
(43) Date of publication of application: **20.05.2026**
(21) Application number: 24213512.7
(22) Date of filing: 18.11.2024
(51) Int. Cl.: G08B 7/06

(54) **ESCAPE ROUTE GUIDANCE SYSTEM, PORTABLE DEVICE AND ESCAPE ROUTE SIGNS**

(71) Applicant: Zumtobel Lighting GmbH, 6850 Dornbirn (AT)
(72) Inventor: Mayr, Gregor, 6851 Dornbirn (AT)
(74) Representative: Beder, Jens

(57) **Abstract**

The invention regards an escape route guiding system comprising a plurality of emergency signs (2, 3) provided with a communication module (5), and at least one portable device (6, 7) provided with a communication module. The communication modules of the emergency signs (2, 3) and of the portable device (6, 7) are configured to establish a communication with each other enabling positioning of the portable device (6, 7) The system comprises a memory (11) storing individual information associated with the portable device (6, 7), wherein the individual information comprises at least one of preferences, habits and attributes. An information processing unit (10) is configured to determine information on an individualized escape route based on the individual information and to transmit the determined information to the at least one emergency sign and/or the portable device (6, 7). The at least one emergency sign (2, 3) and/or the at least one portable device (6, 7) is configured to output at least some of the determined information on the individualized escape route.

## Description

The invention relates to an escape route guidance system to enable improved evacuation of persons from a building by taking into account individual aspects of the person to be evacuated.

For a quick and efficient evacuation of a building, it is necessary that the people in the building are guided out of the building as effectively as possible along escape routes. While earlier systems were static and people were guided out of the building using static escape route signs based on predefined building-specific escape routes, there are now also dynamic escape route signs that allow the information displayed on the escape route sign to be adapted, for example according to an encountered situation. For example, it is possible to use a display to change the information shown, such as the direction of the escape route, and thus react to a blocked area in the building. In this way, either a direction for the escape route can be displayed or the escape route can be blocked in this direction, for example due to smoke in case of fire.

The previously known dynamic escape route signs are part of an escape route guidance system, via which these dynamic escape route signs receive information on which sign (e.g. arrow) or which additional information is to be displayed. However, the existing systems are not able to respond to the individual requirements of people who need to leave the building. The variability is limited to reacting to changing boundary conditions that affect the building to be evacuated itself. This is particularly disadvantageous if the persons have handicaps, for example a visual impairment, physical limitations that make the use of stairs impossible or only possible to a limited extent, or limited language skills, not allowing text information displayed on escape route signs to be read.

These problems are overcome by the present invention according to the features of the independent claims. Advantageous further embodiments and aspects of the invention are defined in the dependent claims.

The escape route guidance system according to the invention comprises a plurality of escape route signs, at least some of which are equipped with a communication module, and at least one portable device, which is also provided with a communication module. The communication modules are designed to establish wireless communication with each other. The wireless communication makes it possible to determine the position of the portable device in the building. Such communication can be based on the Bluetooth standard, for example. However, any other wireless communication is also suitable if the communication between the communicating devices allows to measure the distance or to determine that the communicating devices (escape route sign and portable device) are within a certain area. This area may be defined as the communication range of the communication used by the communication modules. Since the position of the escape route signs and their respective communication modules are known, at least an approximate position of communicatively coupled portable devices in the building can be determined based on the communication with the communication module of the respective portable device. The escape route guidance system also has a memory in which individual information of a person is stored. This individual information comprises at least a preference, a habit and/or an attribute of the person for the escape route.

The escape route guidance system also has an information processing unit that determines personalized escape route information based on the stored individual information. This personalized escape route information, or at least part of it, is then transmitted to or generated in the portable device, the escape route sign or both. The personalized escape route information can thus be output to a person to be evacuated via the portable device or the escape route sign. This makes it possible to adapt the escape routing or at least improve the information regarding the escape route provided to the person to be evacuated. Overall, this leads to an improved evacuation by providing essential and/more or supplementary information that makes it easier to find a suitable escape route.

The escape route sign is preferably configured to output the personalized escape route information visually or acoustically. For example, the escape route sign can have a display on which not only the basic information to be provided in the building regarding the escape route is displayed, but also additional information, for example, text supplementing the information provided by a pictogram. Alternatively or in addition to this, an acoustic output may be provided, for example in the form of a speech output via a speaker which may be integrated into the escape route sign for.

The memory in which the individual information of a person to be evacuated is stored can be a memory of the escape route guidance system, which is provided either as a cloud memory or locally in the building. To enable the portable device to use the information stored in such a central memory to determine the personalized escape route information to be output, the portable device must be provided with access to the memory. Based on a user input, the individual information is stored in the memory.

The portable device is preferably a smartphone, on which an app is installed to be executed by a processor of the smartphone, whereby this app (when executed) is also used to control output of the personalized escape route information that is determined on the basis of the stored individual information. In the case of a smartphone, the corresponding personalized escape route information can be output via the display or via a loudspeaker as acoustic output.

Preferably, the information processing unit is implemented in the smartphone by the app running on a processor of the smartphone, so that the smartphone does not require to communicate with a building-side control center of the escape route guidance system to determine the personalized escape route information to be output.

The escape route guidance system is also preferably set up so that for information to be output via an escape route sign, it is first checked whether output of this information is permissible for all persons for whom personalized escape route information would have to be output via the same escape route sign. Such an output is to be classified as permissible if the personalized information to be output via the escape route sign is identical for all persons or at least does not contradict the personalized information to be output for one of the persons. Such a check has the advantage that personalized information output by an escape route sign, which can be recognized by the persons present, is only issued if it cannot lead to misconduct on a part of the persons to be evacuated. When adapting text information with regard to the language, a preset standard language is preferably used in the case of several languages required according to individual information of people in reach of the same escape route sign, possibly alternating with a second language (for example English and German)

According to a further preferred embodiment, the information processing unit is configured to determine a personalized escape route as personalized escape route information on the basis of map information for a building required by the portable device. The respective map information of the building can, for example, be read in by the information processing unit. When the information processing unit is implemented in the portable device, an interface could be provided in the portable device via which map information can be read in. This map information could, for example, be made available in the form of a QR code on an escape route map displayed in the building. The QR code may then be scanned using a suitable app provided on the smartphone to read in map information of the building.

Preferably, the information processing unit is configured to determine an escape route by selecting an escape route from a plurality of possible different escape routes. The multiple possible different escape routes can, for example, be stored in association with attribute information that can be evaluated by the information processing unit. Such attribute information associated with a possible escape route could, for example, define that a particular escape route is not suitable for wheelchair users or contains a steep staircase so that it is not suitable for people with walking disabilities or bad eyes. The use of such attribute information, which is stored in association with a potential escape route, enables the information processing unit to determine a suitable escape route for any building by determining a match or mismatch between the stored individual information and the attribute information associated with a potential escape route. The attribute information is stored together with the map information and can thus be read in the smartphone (or a corresponding other portable device). The smartphone app (or the corresponding program executed on the portable device) then only has to identify a suitable escape route based on the individual information using the attribute information. In case of a plurality of potential escape routes matching the individual information of a person, further criteria may be taken into account in order to select one specific escape route or specific escape route information. For example, in case of a plurality of escape routes matching with the individual information, the shortest one may be selected.

The personalized escape route information may include at least one of the following features: the personalized escape route itself, supplementary information on an escape route and routing information.

According to a preferred further embodiment, the escape route guidance system is configured such that it not only offers advantages in the event of an evacuation, but can also contribute to improving behavior of the people to be evacuated or the existing escape route plan apart from the that of an emergency situation. For this purpose, position information can be collected (logged) and transmitted directly to the memory as position information or after pre-processing of the position information. Such preprocessing may include an analysis of the position information and could for example identify regularly used corridors and paths through the building by the person carrying the portable device. In this way, habits of people can be determined, which may be relevant for a general definition of escape routes, and evacuation exercises can also be evaluated. On the basis of such an evaluation of an evacuation exercise, targeted measures can then be taken to reduce the time required to evacuate a building or to make critical areas in the building less problematic by improving the choice of escape routes through the building.

Having knowledge about the preferred truths the rebuilding which a user takes enables to specifically present a warning to the user in case that exactly this route is dangerous in case of an emergency. This may be the case if for example stairs usually taken by the respective user are no longer safe because of dense smoke. In such a case a more powerful warning can be presented the user, for example using a combination of visual and acoustic output, or an output accompanied by an alarm tone. Such a powerful warning can be presented by the smart phone or by the emergency sign.

Another advantageous effects of collecting data is that in case of an evacuation exercise, the behavior of the people while the building is being evacuated can be analysed. Thus, afterwards it is possible to evaluate the behavior in order to prepare additional trainings or find problematic aspects in an evacuation plan.

According to a further preferred embodiment, the escape route guidance system comprises at least a first and a second portable device and the escape route guidance system is configured to send a request for assistance to the first device when the first device is within a predetermined maximum distance from the second portable device, and the individual information associated with the second portable device indicates a need for assistance. Such a need for assistance can, for example, be stored as an attribute information entered by the respective user of the portable device. For example, a need for assistance could be stored as an attribute for the individual information "impaired vision".

When determining distances based on communication of the portable device with the escape route sign, the specified distance can be a maximum distance between the portable devices or the entire range within which communication between the two portable devices and the escape route sign is possible. Alternatively, direct communication between the two portable devices is also conceivable in order to determine their distance from each other. The maximum distance between the devices can either be an absolute value in the case of a precisely determined position or a more precisely determined distance, or simply the information "within range" if communication with a correspondingly short range is used.

The invention also relates to a portable device which has a communication module for establishing communication with the escape route sign of the escape route guidance system. The portable device is configured to output personalized escape route information, which is determined by an information processing unit of the escape route guidance system based on the individual information.

Preferably, the information processing unit is provided in the portable device. By arranging the information processing unit in the portable device, it is possible to implement the functionality of determining personalized escape route information in accordance with the present disclosure without further communication with the actual escape route guidance system components provided in the building, i.e. in particular a central server in the building.

It is particularly advantageous that the portable device is a smartphone on which an app is installed that controls, when executed, a display device of the smartphone with which at least a first graphical interface can be displayed that enables user input. Using the first graphical interface allows the user to input individual information based on which the personalized escape route information is determined. Furthermore, a second graphical or an acoustic interface can be controlled by the app when running on the smartphone, which enables visualization of the personalized escape route information or acoustic output of the information.

The invention also relates to an escape route sign which has a communication module with which communication can be established with the portable device of the escape route guidance system, wherein the escape route sign is set up to output personalized escape route information which is determined by an information processing unit of the escape route guidance system.

Further features and aspects of the present invention are explained below with reference to the accompanying drawings. It shows:
- Figure 1: a schematic representation of the fruit guidance system according to the invention with a plurality of portable devices and escape route signs, and
- Figure 2: Examples of the display of personalized escape route information on an escape route sign.

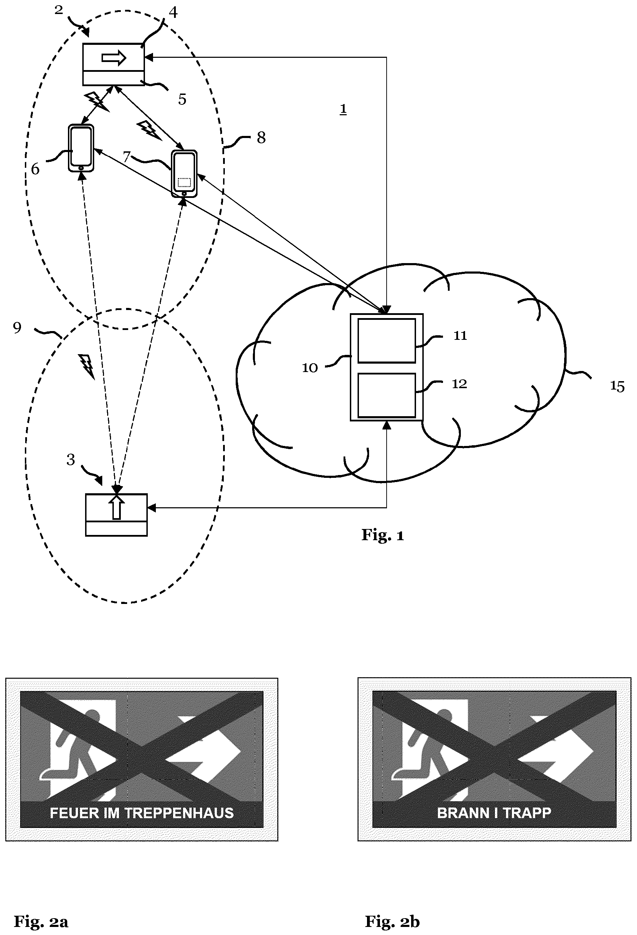

Figure 1 shows a preferred embodiment of the escape route guidance system 1 according to the invention. The escape route guidance system 1 according to the invention comprises a plurality of escape route signs 2 and 3, which are arranged locations in a building in order to indicate a route out of the building to persons. These escape route signs 2 and 3 are designed as dynamic escape route signs in which the visual information can be changed by means of corresponding control signals. As a simple example for explanation, the two escape route signs 2 and 3 show simple arrows to indicate the direction of a further escape route. However, this is not limiting and other information could be displayed as well.

The escape route information, in the illustrated example in the form of arrows, is displayed on a display 4 of the escape route sign 2. In addition to the display 4, the escape route sign 2 is equipped with a communication module 5 with which wireless communication can be established with devices comprising a a he respective communication module. The communication module 5 of the emergency sign 2 can, for example, be used to establish a Bluetooth connection with another device also equipped with a Bluetooth communication module. It should be noted that the display 4 and the communication module 5 are only indicated in relation to the escape route sign 2 in the example shown in figure 1. However, the escape route sign 3 comprises a display surface and a communication module in the same way.

The escape route guidance system 1 according to the present invention also comprises at least one portable device. To illustrate various functionalities that require a plurality of portable devices, two such devices are shown in the illustrated embodiment of the inventive escape route guidance system 1. For the further explanations provided hereinafter to explain advantageous aspects of the present invention, it is assumed that the portable devices are smartphones 6, 7. However, other devices are also conceivable which persons can carry with them and which provide comparable functionalities via corresponding processors and a program running on the processors. The use of a smartphone on which an app is installed that is executed on an information processing unit of the respective smartphone 6, 7 to perform the functionalities described below is the preferred embodiment and is used exclusively for the following explanations.

The escape route guidance system 1 also has an information processing unit 10, which is used to determine personalized escape route information. For greater clarity, this information processing unit 10 is shown externally in the illustrated embodiment example and is implemented in the form of a server 15. Such a server 15 can be a local server or a cloud server.

The information processing unit 10 comprises a memory 11 and a processor 12, which has access to the memory 11. Individual information is stored in the memory 11, on the basis of which the personalized escape route information can be determined. The type of individual information stored there, as well as the input and assignment to the respective smartphone, is explained in detail below.

It should be noted that the functionalities described below, which are provided by the information processing unit 10, do not have to be realized on a server 15, but can also be part of the smartphone 6, 7. In such a case, the information processing unit 10 is realized by the processor of the respective smartphone 6, 7 on which an app is executed. The memory 11 can also be provided in the smartphone 6, 7 so that the information processing unit 10 has access to the information stored there at all times.

For the following explanations it is assumed that the processing unit 10 is integrated into the smartphone 6, 7 so that all information required in order to determine personalized escape route information is available on the smartphone 6, 7 without establishing a connection to a server. In order to enable the smartphone to make use of the individual information stored in the memory 11, an app is stored in the smart phone 6, 7 which is executed on the processor 12. Using a camera function of the smartphone, map information on the building can be read in, for example using a QR code and a respective QR code reader installed on the smartphone 6, 7. It is to be noted that instead of reading in a QR code for accessing a map of the building and escape routes for the building, it is also possible to use any form of link that allows to access the respective information, which may be stored in a cloud, for example.

The smartphones 6, 7 are equipped with a display, preferably realized as a touchscreen which allows not only to display information to the user of the smartphone 6, 7 but also to input information. Using the app, the smartphone 6, 7 can read in information provided by the user in order to store individual information in the memory 11. This individual information concerns preferences, habits and attributes which may become relevant in case of an emergency when the respective smartphone user needs to be evacuated from the building.

In order to maintain privacy of the user, this information may be stored in an account and is only accessible using an anonymous ID.

Examples of user attributes that may be stored as individual information with respect to the user are: walking disabilities, wheelchair use, visual impairment or blindness. Further, preferences may also input by the user using the app and the respective interface produced by the smartphone on its display, for example a preferred language for communication.

Such individual information which is directly input by a user using his/her smartphone for inputting individual data which is then stored in the memory of 11, can be supplemented by information which is derived from the behavior of the person. For example, a smartphone 6, 7 is usually carried with the person when the person moves in the building. In case that the person gave his agreement to collecting data in order to determine the person's habits, positions of the smartphone carried by the user can be determined and collected. This information on the positions allows to determine usually used paths through the building. Such habits like taking always the same route inside the building they also be stored as individual information for a user. Knowledge about such habits allows to specifically present a warning in case of an emergency in order to avoid that the user follows a routine power which, in an emergency situation, may be a bad choice.

When the memory 11 stores individual information of a user, and the processor 12 has access to map information of the building and escape route information of the building, it is possible to analyze the stored individual information in order to determine personalized escape route information based on the stored individual information. For example, the user carrying his smart phone 6, 7, enters an area covered by the range in which communication between the emergency sign 2 and the smartphone 6 can be established. In figure 1, this is indicated by the dashed line 8 drawn around the emergency sign 2.

Using their respective communication modules, the emergency sign 2 and the smartphone 6 establish a communication. From the established communication it is at least clear that the smartphone 6 is within a certain distance around the emergency sign 2 indicated by the dashed line 8. Thus, an approximate location of smartphone 6 in the building is known. In case that the communication established between the emergency sign 2 and the smartphone 6 allows a more accurate determination of the distance between the emergency side 2 and the smartphone 6, for example in case of using ultra wideband technology, the location of the smartphone 6 may be determined with greater accuracy. Generally, emergency signs are arranged in a building in a well distributed manner to ensure that they are visible from almost any location within the building. Thus, in case that the relative distance of the smartphone, for example smartphone 6, to the emergency sign 2 and to the emergency sign 3 is determined based on the communication with both emergency signs 6, 7, positioning of the smartphone 6, 7 is possible. Such communication between the emergency sign 2 and the emergency sign 3 and the smartphones 6 and 7 is indicated by the double sided arrows. The dashed double sided arrows however indicate that a communication between the emergency sign 3 and smartphones 6 and 7 is not possible due to the limited range of communication indicated by the dashed line 9.

Personalized escape route information which is determined by the processing unit 10 may concern any information related to a possible escape route which can be presented to the user carrying the smartphone 6. This personalized escape route information may be displayed or output using a loudspeaker to the assisted user either via the smartphone 6 or the emergency sign 2. The emergency sign 2 may include a loudspeaker or maybe connected to a loudspeaker so that presentation of information does not necessarily mean that the information is provided using the display 4 of the emergency sign 2. Alternatively, acoustic information may be presented using the loudspeaker (not shown in the drawing).

It is to be noted that a suggested escape route itself is also considered to be escape route information. Thus, after determining the (approximate) location in the building, the user may be presented an escape route from his current location in the building. This personalized escape route may be determined already taking into consideration the individual information stored in the memory 11. In case that the individual information stored in the memory 11 includes, for example, information that the user is handicapped and requires a wheelchair for moving, an escape route will be output where ramps are present in addition to stairs.

In case that the personalized escape route information is presented using an emergency sign 2 or 3, a person requiring a wheelchair could automatically be guided to ramps instead of staircases by respective arrows pointing towards the next ramp. After the person left the area of the respective emergency sign, the displayed information could be switched back to general escape route information again, for example directing people to be evacuated towards the closest staircase.

Blind persons may be acoustically guided out of the building. This may be achieved by guiding the person section by section through the building. For example using an acoustic output of the personalized escape route information comprises instructing the person by speech output to make 10 steps forward, then turn to the right, and so on. Also, information on changed circumstances, for example a closed aisle may be presented using the acoustic output. Since blind people cannot see changed directions of an arrow displayed on the display 4 of emergency sign 2, their individual smartphone can provide them with the necessary information using the acoustic output. It is to be noted that any time an acoustic output of the smartphone is mentioned, this is not limited to the outputting speech commands via a loudspeaker of the smartphone itself but may include even a connection outputting the information using earphones connected to the smartphone.

Also vibrotactile signals can be used to guide a blind person through the building. Vibrotactile signals could be used to indicate directions like left or right but also, for example by varying intensity of the vibrotactile signal to indicate approach to a target or intermediate target. For example, an intermediate target could be a location where the direction of movement must be changed.

In case of visually impaired people and acoustic information could be added to the visual escape route information output by the emergency sign 2 or 3. For example, acoustic information could be provided only in case that a visually impaired person approaches the respective emergency sign 2 or 3. Limiting the acoustic output to situations where it is required or at least provides an advantage helps that people stay calm in an emergency situation. Unnecessary acoustic output, could even heat up the stress that people feel in emergency situations.

In addition to providing a personalized escape route only in case of emergency, which is an escape route starting from the current location of the smartphone 6, it is also possible to store information on a workplace in the building as individual information so that independent from any emergency situation, the user may already be provided with information on an escape route. Usually, buildings only show static escape routes, which do not consider disabilities or requirements of a person requiring a wheelchair. These static escape routes are provided on plans attached to walls in the building. So the present invention it is possible to provide an adapted escape route information for people who cannot follow the regular escape route shown on the maps which are posted in the building.

While in the above provided example the entire escape route is presented to the user, the present invention is particularly advantageous for supplementing the general escape route information, which may also be derived from the plans posted in the building. In case that such supplemental information is output using text, this text may be presented in a language which is defined in the individual information of the respective user. Tax information may be presented on the display of the smartphone 6 or supplementing the directional information presented on the display 6 of the emergency sign 2.

In case that the personalized escape route information shall be presented on the display 4 or output by the loudspeaker of the emergency sign 2, there are generally two different ways in order to supply the determined personalized escape route information to the emergency sign 2. First, the information may be determined in the smartphone 6, which is the preferred version for determining the personalized escape route information. In that case, the communication established between the emergency sign 2 and the smartphone 6 is used in order to provide the emergency sign 2 with the information to be output using the display 4 or the loudspeaker.

In case that the processing unit 10 is formed by a server connected to the emergency sign 2 and possibly the smartphone 6, the determined personalized escape route information is supplied from the server to the smartphone 6 and/or the emergency sign 2 for being output and presented to the user. In order to enable the server to determine the personalized escape route information, it is necessary that the server has access to the individual information stored in the memory 11. This can be done using the account ID which is transmitted to the server when the respective smartphone 6 or 7 associated with this account approaches an emergency sign 2 (or 3, respectively). The ID is then forwarded from the emergency sign 2 (or 3) and the fact that the emergency sign 2 was connected to the smartphone 6 or 7 allows to determine at least an approximate position of the smartphone 6 or 7 in the building. The account ID is transferred from the smartphone 6, 7 to the emergency sign 2, 3 when the communication between the respective emergency sign 2, 3 and the smartphone 6, 7 is established.

While outputting the personalized escape route information via the smartphone 6 and 7 is not critical, because individual information may be output by the smartphones 6 and 7, the decision which information to output using the emergency sign 2 is more difficult. According to the present disclosure, the system is configured to determine whether personalized escape route information, which shall be output by the emergency sign 2 is in line with all requirements that can be derived from individual information of a plurality of users also connected to the respective emergency sign 2.

In the illustrated embodiment, two smartphones 6, 7 are both connected to the emergency sign 2 and, thus, within the area indicated by the dashed line 8. Using the example of text output in a specific language, it is evident that the users of the smartphones 6 and 7 may require different languages. Both smartphones 6 and 7 are within a maximal distance of the emergency sign 2 and the emergency sign 2 is therefore the emergency send relevant for presenting information to both users of the smart phone 6 and the smartphone 7. So only in case that the language requirements which may be determined based on the individual information associated with the smartphone 6 (and, thus, with its user) do not contradict the language requirement of the user of the second smartphone 7, text information will be presented on the display 4 of the emergency sign 2 in the respective language. This may be the case for example if the individual information stored for the smartphone 6 and also for the smartphone 7 include the same language information. However, even in case that for the user of the first smartphone 6 language requirements is stored in the memory 11 but no language information or another language information is stored for the user of the second smartphone 7, no text information is output in the preferred language of the user of the first smartphone 6. In such case, a default language will be used in order to present additional information on the dynamic emergency sign 2.

It is to be noted that in case that no conflict of the information to be output by the emergency sign 2 can be determined, it is even possible to adjust the routing information presented on the display 4 of the emergency sign 2 so a person requiring the wheelchair and approaching the emergency sign 2 may cause other directional information to be presented on the display 4 of the emergency sign 2 due to requiring ramps instead of stairs. As mentioned above, such alternative routing information or supplementary escape route information may only be provided in case that the same escape route is also permissible with respect to all other persons in a predefined area around the emergency sign 2. The predefined area is set in advance and defines an area around the emergency sign 2 or 3 in which the persons rely on information provided by the respective emergency sign 2. Ideally, this predefined areas correspond to the range in which communication between the emergency sign 2 and the respective smartphone 6 and 7 is possible.

The inventive system may also be used to enable one person helping another in case of an emergency. Since positioning of the smartphones 6 and 7 allows to determine whether the respective users of the smart phones are in proximity to each other, it is possible to alert one of the persons to help the other. For example, the user of the smartphone 6 input as individual information stored in the memory 11 that he would like to have assistance because of visual impairments. On the other hand, the user of the smartphone 7 input in the individual information that he/she would be willing to assist another person if needed. In the situation illustrated in figure 1, both persons approach the emergency sign 2 and, based on the communication established between the emergency signs 2 and the smartphones 6 and 7, or established between the smartphones 6 and 7 directly, a distance between smartphone 6 and smartphone 7 can be determined.

If this determined distance is below a threshold that can be set in the system, the user of the smartphone 7 can be alerted to assist the user of the smartphone 6.

Figures 2a and 2b show the same emergency sign as one example, in which general information or personalized escape route information is presented. In the illustrated embodiment, text information is displayed in addition to the pictogram. While figure 2a shows for example outputting text information using a default language, figure 2b shows that the text information changed to another language after a person approached whose individual information indicated another preferred language. As mentioned above, in case that a plurality of different persons are determined within a certain range around the emergency sign, and for these plurality of different persons no common preferred language can be identified, the text information will be output using the default language.

## Claims

1. Escape route guiding system comprising
a plurality of emergency signs (2, 3) provided with a communication module (5),
at least one portable device (6, 7) provided with a communication module, wherein the communication modules of the emergency signs (2, 3) and of the portable device (6, 7) are configured to establish a communication with each other enabling positioning of the portable device (6, 7),
a memory (11) storing individual information associated with the portable device (6, 7), the individual information comprising at least one of preferences, habits and attributes, information processing unit (10), wherein the information processing unit (10) is configured to determine information on an individualized escape route based on the individual information and to transmit the determined information to the at least one emergency sign and/or the portable device (6, 7),
wherein the at least one emergency sign (2, 3) and/or the at least one portable device (6, 7) is configured to output at least some of the determined information on the individualized escape route.

2. Escape route guiding system according to claim 1, wherein the at least one emergency sign (2, 3) includes at least a display and a speaker.

3. Escape route guiding system according to claim 1 or 2, wherein the memory (11) is a central memory (11) of the escape route guiding system (1) and the portable device (6, 7) is configured to receive individual information by a user input and to transfer the individual information to the central memory (11).

4. Escape route guiding system according to any of the preceding claims, wherein the portable device (6, 7) is a smartphone.

5. The information processing unit (10) is implemented on the smart phone by an app installed on the smartphone (6, 7).

6. Escape route guiding system according to any of the preceding claims wherein the system is configured to determine whether outputting information on an individual escape route by an emergency sign (2, 3) is permissible with respect to people determined to be present in a predefined area around the emergency sign (2, 3).

7. Escape route guiding system according to any of the preceding claims, wherein the information processing unit (10) is configured to determine an escape route based on mapped information obtained for a building.

8. Escape route guiding system according to claim 7, wherein the information processing unit (10) is configured to determine the escape route by selecting an escape route from a plurality of potential escape routes based on attribute information stored associated with each potential escape route.

9. Escape route guiding system according to any of the preceding claims wherein the information on the individualized escape routes comprises at least one of: the determined individualized escape route, supplemental information, routing information based on the determined escape route.

10. Escape route guiding system according to any of the preceding claims, wherein the portable device (6, 7) is configured to collect position information and transmit the collected position information or preprocessed position information to the memory (11).

11. Escape route guiding system according to any of the preceding claims, wherein the system comprises at least two portable devices (6, 7) and is configured to send an assistance alert to one portable device (6, 7) identified to be with in a predefined distance from another portable device (6, 7) associated with an account for which an assistance requirement can be determined from the stored individual information.

12. Portable device (6, 7) provided with a communication module for establishing communication with an emergency sign (2, 3) of an escape route guiding system and configured to output information on an individualized escape route determined by an information processing unit (10) of the escape route guiding system.

13. Portable devic (6, 7)e according to claim 12, wherein the information processing unit (10) is provided in the portable device (6, 7).

14. Portable device (6, 7) according to claim 12 or 13, wherein the portable device (6, 7) is a smart phone on which an app is installed, the app controlling a display to display at least one of the first interface enabling user input and a second interface enabling visualizing the determined information on the individualized escape route.

15. Emergency sign (2, 3) provided with a communication module for establishing communication with a portable device (6, 7) of an escape route guiding system and configured to output information on an individualized escape route determined by an information processing unit (10) of the escape route guiding system.
